# EUROPEAN PATENT APPLICATION

(11) **EP 3 855 112 A1**
(43) Date of publication of application: **28.07.2021**
(21) Application number: 20153248.8
(22) Date of filing: 22.01.2020
(51) Int. Cl.: G01C 1/02

(54) **GEODETIC INSTRUMENT COMPRISING A BASE AND A GEODETIC SURVEYING AND/OR PROJECTION MODULE**

(71) Applicant: Leica Geosystems AG, 9435 Heerbrugg (CH)
(72) Inventor: HOTZ, Johannes, 9445 Rebstein (CH); BÖSCH, Thomas, 6890 Lustenau (AT); MÜLLER, Josef, 9413 Oberegg (CH)
(74) Representative: Kaminski Harmann

(57) **Abstract**

The invention relates to a geodetic instrument (1), for example for construction works, with a base module (2) and a surveying and/or projection module (4, 4a-4d). A processor for control of the instrument (1) is situated in the base module (2). The surveying and/or projection module (4, 4a-4d) is rotatable about two axes (H, V) by a drive unit (12, 13) of the base (2). The instrument (1) comprises a mechanical interface (5, 5a) connecting the surveying and/or projection module (4, 4a-4d) to the base module (2) and an optical and/or electrical contact interface (5, 5 b, 5c) between the base module (2) and the geodetic surveying and/or projection module (4, 4a-4d). The interfaces (5, 5a-5c) are designed such that the surveying and/or projection module (4, 4a-4d) is mountable to the base module (2) and dismountable from the base module (2) by a user (3), whereby the geodetic instrument (1) is designed for mounting of various surveying and/or projection modules (4, 4a-4d) of different geodetic type and execution of accordingly different geodetic surveying and/or projection functions.

## Description

The present invention relates to a geodetic surveying and/or projection instrument, in particular for construction works such as layout or stakeout tasks ("design to reality") or as-built data capture ("reality to design"), a geodetic instrument base and a geodetic surveying and/or projection module.

Geodetic instruments for surveying or projection e.g. of point coordinates are known in the art. Such surveying appliances for tracking or marking and surveying spatial points on surfaces of a structure or object are particularly used for measuring of a surrounding or workpiece, in particular large entities such as fuselages, or construction or inspection of buildings, e.g. in course of BIM (Building Information Model) to Field-assignments or laying out building elements such as MEP (Mechanical Electrical Plumbing) installation, walls, anchor points etc. The distance and angle from a such measuring device to one or more target points to be surveyed can be recorded as spatial standard data. On the other hand, planned position data, e.g. based on a digital building plan or CAD-data, can be projected in a position true manner on an object's surface by a laser beam for layout or stake out purposes. Such instruments are used for traditional geodesy (land surveying) or for geodetic measuring in the industry (e.g. 3D-coordinate acquisition of workpieces for quality control) as well as for accurate construction of buildings like streets, tunnels or houses and for interior construction or assembly tasks, e.g. using templating, by designers like architects, kitchen makers, glaziers, tilers or staircase builders, e.g. for as-built data capture. It is emphasized that, in the present application, the terms "geodesy" and "geodetic" are not limited to the scientific discipline that deals with the measurement and representation of the surface of the earth and the seafloor, but relate in a broad sense to measuring, surveying and position determining or projection of object points in order to acquire digital object coordinates or mark digital object coordinates in space.

Known geodetic instruments of the generic type such as construction surveying appliances typically comprise a base, an upper part mounted so as to be able to rotate about an axis of rotation on the base, and a sighting unit, mounted so as to be able to swivel about a swivel axis, with a laser source, which is designed to emit a laser beam, and an imaging detector, for example equipped with an orientation indicating functionality for indicating an orientation of the sighting unit with respect to a spatial point as a sighting point, and also with a distance determining detector for providing a distance measuring functionality. By way of example, the orientation indicating functionality may be a reticle in the viewfinder or a camera as imaging detector.

Modern, automated construction surveying appliances furthermore comprise rotary drives, which make the upper part and/or the sighting unit drivable in a motorized manner, goniometers and, if appropriate, inclination sensors for determining the spatial orientation of the sighting unit, and also an evaluation and control unit, which is connected to the laser source, the distance determining detector and also the goniometers and, if appropriate, inclination sensors.

In this case, the evaluation and control unit is equipped, by way of example, with a display having input means for inputting control commands from a user on the display (e.g. touchscreen) or what is known as a joystick that is directable, for the purpose of altering the orientation of the sighting unit by directing the joystick, and for presenting an image from the imaging detector or the camera on the display, wherein the orientation of the sighting unit can be indicated by means of the orientation indicating functionality on the display, e.g. by means of overlaying. Functionalities are known in which the input means on the display are in the form of arrows, the marking and touching of which enable a user to alter the orientation of the sighting unit in a horizontal or vertical direction.

On the other hand, projection of visible or invisible points or lines is used for providing positional reference points or lines serving as a reference for either the human eye or for electronic systems and also allowing automatic positioning or machine guidance. Here, the reference lines are usually created by widening a laser beam, which is possible for straight lines in particular, or else by rotating projection of a laser point.

An example of geodetic instruments suitable for this are rotating lasers or line or point lasers, which serve to fix a plane using a visible or invisible laser beam and have been in use for a number of years now, for example in the building trade or in industry. They are a valuable aid for marking construction lines on horizontal, vertical or else defined angled planes. However, previous rotating lasers are disadvantageous in that they are only able to create those projection planes which contain the initial point of the laser beam. Thus, in order to project spatial points along a line in a predefined horizontal plane, the light emission point of a conventional rotating laser must be positioned precisely in this plane and the laser module must be adjusted precisely to the horizontal light emission (and the rotation axis must be aligned precisely vertical). Thus, the work region for using a rotating laser for marking a horizontal plane is restricted to the adjustment region for the height of a base on which the rotating laser is mounted. Projecting a laser beam rotating about a vertical axis by means of a conventional rotating laser in a non-horizontal (e.g. directed obliquely upward) direction leads to spatial points situated closer being projected to a lower height than spatial points situated further away.

DE 44 43 413 discloses a method and a device for both measuring and marking on distanced lines or areas. One or more relevant spatial points are measured in respect of in each case two spatial angles and the distance in relation to a reference point using a laser-distance measuring unit, mounted in a cardan-type mount. The laser-distance measuring unit is pivotable about two mutually perpendicular axes which are equipped with goniometers. In accordance with one embodiment described in these documents, spatial points to be measured are targeted manually, marking points are calculated from the measurement data based on a predetermined relative relationship between measuring and marking, which marking points are then targeted independently by the measuring and marking device.

As another example, EP 2 053 353 discloses a reference line-projecting unit with an electro-optical distance measuring unit. In accordance with the teaching of this application document, an optical reference beam, in particular a laser beam, is routed along a defined reference path. By integrating a distance measuring unit, the system disclosed in EP 2 053 353 also enables a control of the projection on the basis of an established surface topography.

DE 196 48 626 discloses a method and an apparatus for area surveying with a laser rangefinder having a laser transmitter and a laser receiver. The laser rangefinder is mounted on a stand. The apparatus furthermore comprises a tilting and rotating device for orientation and direction measurement, a telescopic sight and also an electronic evaluation unit for angle data capture, distance data capture and data transfer to a computer. For surveying a space, the appliance is positioned at a central location in the space. However, often it is not possible that all spatial and/or area corner points to be detected can be sighted and impinged upon by the laser beam from only one location and multiple stationings are necessary to cover all points to be surveyed whereby it is cumbersome and time-consuming to move and position the apparatus.

As can be seen, a large number of technical arrangements and methods are known for measuring and/or marking spatial points in the course of construction or development of buildings. Also, in order to fulfil complex surveying tasks, in particular in a free terrain, geodetic total stations or theodolites, as known in the generic prior art, have been used for very many years. Such devices are, in principle, technically also suitable for fulfilling a plumb point finding functionality, for example during interior finishing of a building. However, they are technically relatively complex and costly devices.

In addition, it is cumbersome and costly to have to provide many different geodetic instruments for different surveying or projection tasks to be done. As another disadvantage, such bulky instruments must be carried around when measuring, even when measuring only roughly or supplemental. Above that, with large instruments of the state of the art, some locations such as contorted room edges or very near to a surface (e.g. direct beneath a ceiling) are difficult to reach if not impossible to reach at all.

It is therefore an object of the invention to provide an improved geodetic instrument.

It is a further object of the invention to provide an improved geodetic instrument which facilitates different geodetic surveying and/or projection tasks.

This object is achieved by the realization of the characterizing features of the independent claims. Features that develop the invention in an alternative or advantageous manner can be gathered from the dependent patent claims and also the description including the descriptions of figures. All embodiments of the invention that are illustrated or disclosed in some other way in this document can be combined with one another, unless expressly stated otherwise.

The invention relates to a geodetic instrument, for example for construction works, with a base module and a surveying and/or projection module. The geodetic instrument comprises a mechanical interface connecting the surveying and/or projection module to the base module and an optical and/or electrical contact interface adapted for transmission of data and/or energy between both modules. The surveying and/or projection module comprises at least one sensor, e.g. an electronic distance sensor, and/or projector, e.g. a point laser, for acquisition and/or projection of object data.

The base module comprises an electrical power unit for powering the geodetic instrument, a first processor, powered by the electrical power unit, for processing of geodetic data and control of the geodetic instrument. Further, the base module comprises at least one drive, powered by the electrical power unit, adapted for driving the geodetic surveying and/or projection module about two rotational axes (by rotation of the module relative to the base and/or rotation of the base and therewith the module), in particular a horizontal and a vertical axis and at least one angle encoder for measuring the rotational position of the surveying and/or projection module with respect to the two rotational axes, for example an angle sensor for a respective axis, each.

Said interfaces are designed such that the surveying and/or projection module is mountable to the base and dismountable from the base module by the user. Additionally, the geodetic instrument is designed for mounting of various surveying and/or projection modules of different geodetic type to the base module and execution of accordingly different geodetic surveying and/or projection functions. Thus, the geodetic instrument can be used for example like a total station when equipped with one module, like a laser scanner when another module is mounted by the user and like a rotating laser with still another of the exchangeable modules -whereby a module may cover in itself more than one geodetic function-, all this with one and the same base module and without displacing the instrument, i.e. in one and the same stationing.

Optionally, the geodetic instrument is designed in such a way that all of the mountable various surveying and/or projection modules are referenced to one and the same origin of coordinates. Thus, all modules relate to the same point without any parallax or offset. No transfer or correction (e.g. no correction matrices) of coordinates are needed but a user can for instance measure with one surveying and/or projection module, exchange it with another surveying and/or projection module and acquire additional measurement data directly in the same coordinate space or project digital point data referenced to the same origin as the first measurement.

For ease of exchange, optionally the interfaces are designed such that an operable mounting of dismounted surveying and/or projection module to the base module -and analogically dismounting of mounted surveying and/or projection module-is effectable by a single manual action of the user, e.g. pushing only one knob or release button for dismounting and mounting the surveying and/or projection module just by "clicking" it to the base module. For example, mounting and dismounting can be done by only one substantially linear or rotational hand movement, either with a tool or tool-free. As a further option, and/or the mechanical and optical and/or electrical contact interfaces are designed as a joined interface (which can be seen as one interface providing mechanical connectivity as well as optical and/or electrical connectivity; hence, in the present invention, "interface" is sometimes used both for mechanical or optical and/or electrical connection means as well as for the interface as a whole and only part or counterpart of the interface).

Additionally or alternatively, the mechanical interface is designed such that a mechanically stable mounting of the surveying and/or projection module to the base module is secured by at least one of a magnet (with magnetic or ferromagnetic counterpart), one screw, one spring-loaded catch/claw, one twistable catch/claw, a bayonet fastening, one ball lock pin. Preferably, in case of fixing means such as a screw or claw, there is exactly one of it (only one anchor point) such that a user has only to manipulate one of them to mount or dismount.

As another option, the mechanical interface is designed in such a way that the mounting position of a respective surveying and/or projection module is precisely reproducible and thermally stable. That is that a respective surveying and/or projection module is placed in exactly the same way onto the base module in spite of the various mounting and dismounting procedures and thermal or temperature variation.

Optionally, the surveying and/or projection module is designed as a portable stand-alone geodetic surveying and/or projection module with a battery, a data storage and a second processor in such a way that temporarily geodetic, e.g. free-hand, surveying and/or projection with the geodetic surveying and/or projection module dismounted from the base is enabled. In other words, the surveying and/or projection module is not only functional or operative when connected to the base module but also in some limited form on its own.

Optionally, the mechanical interface comprises at least three guidance elements with equal angular spacing to each other whereby each guidance element comprises a ball or spherical calotte and a two-point support as a receiving counterpart, each two-point support being for example embodied as one prism or two cylinders. Preferably, the ball or spherical calotte and a two-point support are preloaded with respect to each other by magnetic force or by springs.

In embodiments with an electric interface, the surveying and/or projection module is optionally chargeable by the power unit through the electric interface. As another option, a battery of the surveying and/or projection module serves as an electrical power reserve for the whole instrument. That is that not only the surveying and/or projection module can be powered by the base module but also the other way round the surveying and/or projection module can power the base module.

Optionally, the base module and the surveying and/or projection module comprise a transmitter each for wireless data transmission between base and (dismounted) module. In this case, as a further option, the surveying and/or projection module can be controlled wirelessly by the base module (processor) even when dismounted from the base in remote control.

As another option, the centre of gravity of the instrument is such that the instrument can be positioned stable by the base. The base module then comprises a ground surface, e.g. a complete flat bottom surface or three or more points defining a surface. Additionally or alternatively, the base module comprises a release interface for attaching the geodetic instrument to a support structure, in particular a tripod.

The invention also relates to a geodetic instrument base module comprising an electrical power unit, a (first) processor, powered by the electrical power unit, for processing of geodetic data and control of the base module. The instrument base module comprises further a mechanical interface part and an optical and/or electrical contact interface part. The interfaces are designed for mounting and dismounting a surveying and/or projection module by a user (in the field). By the optical and/or electrical contact interface, data and/or energy can be transmitted between the base module and the surveying and/or projection module if mounted. The processor is further adapted for control of a respective surveying and/or projection module.

The base module further comprises a drive, powered by the electrical power unit, adapted for driving the mechanical interface and/or the base module about two rotational axes, in particular a horizontal and a vertical axis, and at least one angle encoder for measuring the respective rotational position. In other words, the base comprises a drive adapted for driving the mounted surveying and/or projection module about two rotational axes, by changing a rotational position of the base itself and/or the rotational position of the mechanical interface, and at least one angle encoder for measuring the rotational position of the mounted geodetic surveying and/or projection module with respect to the two rotational axes.

Optionally, the base module comprises a power unit part comprising the power unit and a main part and the drive comprises a first drive unit for rotation of the main part (and therewith the module if mounted) relative to the power unit part about a first, in particular vertical, axis and a second drive unit for rotation of the mechanical interface (and therewith the mounted module) relative to the main part about a second, in particular horizontal, axis. Further, a respective angle encoder is integrated in the drive unit each. Preferably, the first and the second drive unit are of identical construction or type.

As further options, the mechanical interface and the optical and/or electrical contact interface are integrated in the second drive unit and/or the power unit part is tool-free exchangeably connected to the main part.

Optionally, the mechanical interface of the base comprises a centering and a fixation and/or the base module is asymmetric with respect to a vertical axis.

The invention further relates to a surveying and/or projection module comprising a mechanical interface counterpart designed for connecting the surveying and/or projection module to a geodetic base module according to the invention as described above and an optical and/or electrical contact interface counterpart adapted for transmission of data and/or energy between the base and the geodetic surveying and/or projection module. Preferably, the interfaces are designed such that the surveying and/or projection module is mountable to the base module and dismountable from the base module tool-free.

Further, the surveying and/or projection module is optionally designed as a portable stand-alone geodetic surveying and/or projection module with a battery, a data storage and a (second) processor in such a way that temporarily geodetic, for example free-hand, surveying and/or projection with the geodetic surveying and/or projection module dismounted from the base is enabled.

Optionally, the module is embodied as a laser scanning head, an opto-electronic surveying head, a point or line laser projector, a camera head with at least one camera and/or a multi-photo measuring head, whereby the features can be mixed in one and the same head (e.g. a module with a camera and a pointing laser).

As another option, the surveying and/or projection module comprises a telescope and/or a panorama and/or wide angle objective, and an illumination light for illumination of the field of view of the telescope and/or the objective. In other words, the surveying and/or projection module comprises a light source for illumination of the target or object space visible by the telescope of objective. As a further option, the surveying and/or projection module comprises an automatic target recognition unit designed for tracking (locking onto) geodetic targets such as a retroreflector.

For projection functionality, the surveying and/or projection module optionally comprises a first line laser, a second line laser and a point laser, whereby the emission plane of each of the two line lasers is oriented orthogonal to each other and to emission direction of the point laser.

Hence, the present invention advantageously provides a geodetic instrument which covers different geodetic technologies with only one instrument resp. one and the same basic infrastructure and different measuring top pieces. The instrument base can be equipped with surveying and/or projection modules of various type such that there is a multi-purpose geodetic instrument available whereby quick and comfortable exchange of modules is enabled. The exchange of e.g. a TPS head with a scanner head or the other way round can be done in the field by the user preferably tool-free without moving the instrument. Thus, the operator can complete a layout and scan on a single setup and most advantageously referenced to one and the same origin of coordinates. Then, the scan data can be used by the TPS head to position itself in space.

In addition, the surveying and/or projection modules preferably are designed such that they are (limitedly) usable as stand-alone geodetic devices. Thus, the functionality of the geodetic instrument is even more enlarged. For example, quick overview or supplemental measurements or surveying, using imaging technologies with embedded cameras and/or projection at otherwise inaccessible sites is enabled.

The invention allows for an uncomplicated and easy adaption to different geodetic objects or geodetic tasks by the user on-site, without the need for many different costly separate "full-fledged" instruments.

The geodetic instrument according to the invention is described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention.

Specifically,
- figure 1: illustrates a first example of a geodetic instrument;
- figures 2a,b: show an exemplary embodiment of a geodetic instrument in more detail;
- figure 3: shows examples for various surveying and/or projection modules;
- figure 4: depicts an example of a tool-freely mountable and dismountable surveying and projection module;
- figures 5a,b: illustrate an inside view of an exemplary geodetic instrument;
- figures 6: illustrates another inside view of an exemplary geodetic instrument;
- figure 7a,b: show examples of a simplified mechanical interface of the geodetic instrument; and
- figures 8a-f: show examples for means for fastening a surveying and/or projection module to the base module by the mechanical interface.

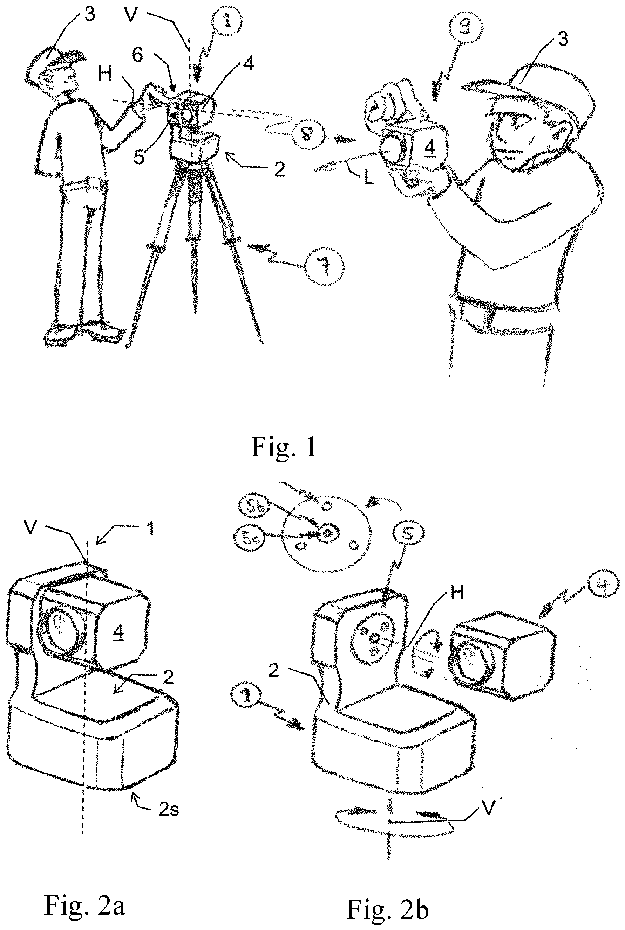

Figure 1 illustrates a first example of a geodetic instrument 1 according to the invention and its utilisation by a user 3.

Figure 1 shows on its left side the geodetic instrument 1 having a base module 2 and a surveying and/or projection module 4 connected to the base 2 by an interface 5. The geodetic instrument 1 is positioned on a tripod 7 as support structure by a release interface (not shown). In this setup, the geodetic instrument 1 can be used in principle as a portable geodetic device known in the art like a total station or theodolite, laser templator or laser scanner, which is positioned at a station for example for surveying or measuring purposes in indoor or outdoor construction works, if the surveying and/or projection module 4 is embodied as an opto-electronic surveying head, multi-photo measuring head or laser scanner head. As a further example, having a projection module 4, the instrument 1 can be used as a point and/or line laser projector, e.g. in form of a laser level or rotary laser. Further, a projection module 4 can be used for position true projection of a point, line or geometric shape on an object's surface according to a construction plan or CAD-data or the like, enabling a visual marking of a nominal position such that for instance a construction work can be performed at or according to that nominal position. For example, the instrument 1 provides by module 4 a 780nm EDM (electronic distance measuring) laser for surveying and a 532nm laser for pointing.

Further, as also known in principle by the skilled person, the instrument 1 can comprise an automatic target recognition (ATR)-unit (not shown) in the geodetic module 4 for locking onto a geodetic target such as a surveying pole respectively for target tracking. In addition, a far field ATR is optionally present.

For whatever surveying or construction task, the user 3 can command or operate the geodetic instrument 1 by a user interface (not shown) situated at the base 2. For example, a measuring of 3D coordinates of object points (single point measurement or scanning) can be started by pushing a button at the instrument or a remote control or running on a tablet/smartphone/control unit once the instrument 1 is stationed in a room as indicated in the figure (reference number 6).

According to the invention, the surveying and/or projection module 4 of the geodetic instrument 1 is also easily dismountable, e.g. tool-freely, from the base 2 (indicated by arrow 8) and exchangeable by another surveying and/or projection module by the user 3. That is the "sensitive" main component 4 of instrument 1 can be connected to the base main component 2 and disconnected from it in the field conveniently by user 3. Further, the geodetic instrument 1 is designed such that surveying and/or projection modules 4 of different type are supported by base module 2 and operable with their varying functionalities. For example, a laser scan module 4 for scanning an environment can be exchanged by a laser projection module for visually marking planned position or object points in the environment.

All mountable modules 4 thereby relate to one and the same origin of coordinates. Hence for instance, a surrounding first can be scanned by a scanning module 4, then referenced or compared to a stored digital map of the surrounding, the map comprising target positions, and then these target positions can be visibly marked position-true in the surrounding by a projection module 4 mounted by the user 3 instead of the scanning module 4 in the meantime, based on the scan data and reference data. Thereby, due to the same coordinate origin, no parallax has to be taken into account and no computational correction of coordinates is needed.

In the example, surveying and/or projection module 4 is in addition not only operational in connection to the base module 2, but temporarily usable as stand-alone geodetic device. As indicated in exemplary figure 1, the user 3 can use the module 4 for free-hand geodetic tasks, controlling it by a human-machine-interface (HMI) at the module 4 (indicated by reference number 9).

For example, often not all 3D coordinates of a room can be measured from a station but some points are hidden or occluded. The user 3 then can quickly disconnect the geodetic module 4 wherefore conveniently no tools are necessary, go to a position wherefrom the missing points are visible and measure these points. Measuring can be done e.g. using a measuring beam L as shown in the figure and using measuring methods such as time-of-flight, phase, wave form, photogrammetric or interferometric evaluation.

Preferably, the interface 5 comprises an electrical contact such that the battery of the surveying and/or projection module 4 can be loaded from the power unit of the base 2 through this electrical interface, thus providing an easy and self-reliant way of charging surveying and/or projection module 4.

For referencing of free-hand measurements with dismounted surveying and/or projection module 4 to the same reference or coordinate system of the stationary measurements, the module 4 comprises for instance positional sensors such as an inertial measurement unit (IMU), gyroscope and/or inclinometer or GNSS-receivers in case of outdoor activities (not shown). Additionally or alternatively, a referencing such as registration of 3D point clouds can be effected by measuring a number of reference points from both the stationary position as well as from the free-hand position and/or by 2D- or 3D-image based path derivation using image processing techniques such as feature matching with algorithms such as SIFT- (Scale Invariant Feature Transformation), SURF-(Speeded Up Robust Features), FAST-(Features from Accelerated Segment Test), BRIEF-(Robust Independent Elementary Features) or ORB-(Oriented FAST and Rotated BRIEF).

As another example, the autonomy of the surveying and/or projection module 4 and its relatively small size can be used to position it at nearly every position, in particular positions which are not accessible with the relatively large or bulky geodetic device 1 as a whole. Thus, e.g. a level laser can be emitted from nearly everywhere in a room. For this purpose, the geodetic module 4 may have attaching means such as magnet or clamp (not shown) for attaching it onto a wall or ceiling or the like.

As still another example, the possibility of independent operation of the geodetic module 4 enables the user 3 to perform quick data acquisition such as a rough scanning of a room. Hence, for instance a 3D-overview of a surrounding can be gathered just by the user 3 holding the module 4 and turning around himself. When more reliability resp. more precise measurement is needed, e.g. a specific section of the surrounding determined or selected based on the rough overview surveying, the geodetic module 4 is then mounted to the base 2 -which is easily done due to the tool-free handling enabled by interface 5- for improved measurement capabilities.

Improved surveying capabilities of the complete geodetic device 1 as a whole -compared to the geodetic module 4 on its own- are provided by the stable holding and automatic positioning of the geodetic module 4 when mounted to the base 2. For precise positioning and thus measuring or projecting, the base 2 comprises a drive (not shown in figure 1), powered by an electrical power unit (not shown) of the base module 2, for driving the surveying and/or projection module 4 about a first axis H and a second axis V. The respective actual rotational position about each axis H, V is determined with respective angle encoder (not shown).

In addition, the power unit of the base 2 possesses a relatively large capacity, allowing for power intensive computations with a processor built into the base 2, power intensive surveying operations such as measuring points in the far field with a measuring beam and long operating duration. Compared with, the geodetic module 4 when used as a temporarily stand-alone device is of limited operational and computational power.

For example, data intensive measurements (e.g. a laser scan) in the autonomous, off-station modus of the surveying and/or projection module 4 are just stored on an internal data storage of the module 4 without any further data evaluation or processing. Then, after attaching the module 4 to the base 2, the stored data is transferred to the base module 2 and the computational power of the base 2 is used to process and evaluate the measurement data and e.g. to form a graphic representation or interpretation, displaying it on a display of the instrument 1 (which may also be a portable display such as a tablet or smartphone connected with the base 2 resp. instrument 1). In an analogous manner, it is possible to buffer the scan data in the module 4 and then directly transfer (when connected) to a tablet or other control unit.

Alternatively, data acquired in the stand-alone mode can be transferred wirelessly from module 4 to the base 2 for further processing there, particularly on-the-fly or already during measuring. In such embodiments with wireless data transmitters, the data storage of the mobile module 4 may be only a non-permanent storage and a permanent storage may be dispensable or optional, e.g. in form of an exchangeable storage card inserted in a card reader of module 4 or e.g. as a back-up to the already transferred data to tablet, smartphone or control unit.

Generally spoken, the geodetic measurement capabilities or range of functions of the geodetic module 4 are enhanced and extended when combined with the base 2 to form the geodetic instrument 1 compared to its stand-alone use. The capacity and functionality of the module 4 in autonomous application are limited compared to the "full" instrument 1.

The described configuration of geodetic instrument 1 enables first robust and highly reliable geodetic measurements or position true projection by the combination of surveying and/or projection module 4 and base module 2 with a high level of geodetic capability/functionality and precision.

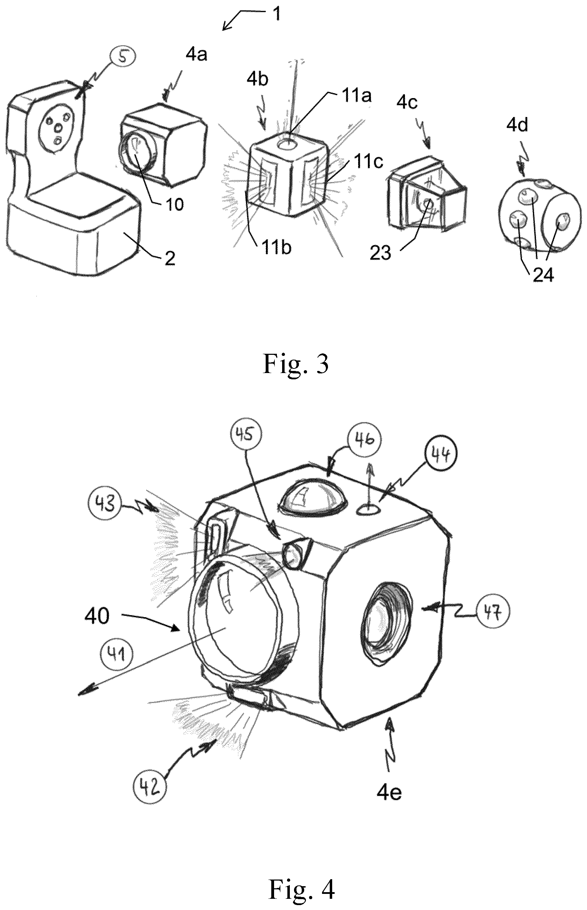

Second, the geodetic instrument 1 is designed such that it may comprise various exchangeable geodetic survey or projection modules 4 of different type, thus providing different geodetic functionalities with only one and the same basic (infra-) structure (in form of base 2) which is described in more detail with respect to figure 3. In other words, the geodetic instrument 1 is configured such that not only one (generic group of) module 4 is provided but multiple sort of module 4 can be combined with base 2, thus providing a bunch of geodetic capabilities. Geodetic instrument 1 serves as a multi-purpose geodetic instrument by the possibility to easily exchange the measuring or pointing module 4 with another one. High flexibility and improved range of application is provided in that the geodetic module 4 is easily exchangeable by another geodetic module 4, i.e. base module 2 can be combined with different surveying and/or projection modules 4.

Third, high flexibility and improved range of application is further enhanced in that the geodetic module 4 is easily attachable and detachable to the base 2 and in that it can be used as a semi- or temporarily autonomous geodetic unit, e.g. for quick or supplemental measurements, fast and temporary change of location or locations not or hardly accessible with the complete instrument 1. Flexibility of module mounting and dismounting and stationed and free-hand measurement is provided.

Figures 2a and 2b show in a 3D-view an exemplary embodiment of a geodetic instrument 1 -as for instance intended for geodetic measuring or referencing at a construction site- in more detail.

In figure 2a, the geodetic instrument 1 is depicted with the geodetic survey and/or projection module 4 docked to the base module 2. For attachment, the base 2 and the surveying and/or projection module 4 comprise an interface 5 or that is to say the instrument 1 comprise an interface 5 with part of it situated at base 2 and the counterpart situated at module 4. Interface 5 is shown in more detail in figure 2b.

The base module 2 optionally comprises on its lower side or bottom face 2s a connector (not shown) for connection of the instrument 1 to a stand, e.g. a tripod. Alternatively or additionally, the bottom face 2s is designed such, for example as a flat surface or with three contact points, that the instrument 1 can be placed stable on a surface (bottom) wherefore the instrument 1 is designed such that the centre of gravity of the instrument 1 lies securely within bottom surface 2s.

As depicted, the exemplary instrument 1 is asymmetric with respect to the vertical axis V. This facilitates a simple mounting and demounting of the surveying and/or projection module 4 by an operator.

Figure 2b illustrates the geodetic instrument 1 with a detached surveying and/or projection module 4 such that the interface 5 is visible. Also indicated are the vertical axis V the base 2 and accordingly the module 4 attached to the base is rotatable about and the horizontal axis H as a second axis the module 4 is rotatable about by the interface 5 when attached with the help of one or more drives and angular sensors which are described in more detail in the following figures. For example, the interface 5 is integrated in a drive unit for driving the module 4 about horizontal axis H.

As shown in the upper part of figure 2b, the interface 5 comprises a mechanical part 5a, an electrical connection 5b and optical connection 5c. One can also say that there are two interfaces, a mechanical interface 5a for fastening the module 4 to the base and an optical and electrical interface 5b, 5c for energy supply and data transfer, wherein the two interfaces 5a and 5b,c are embodied a joined interface 5.

As said, the interface 5 comprises a mechanical centering and fixation 5a as well as an electrical connection 5b and an optical connection 5c. The interface 5 is designed such that the module 4 can be mounted to the base 2 and demounted from the base 2 very easily, with a only one operation, for example with one translation or rotation, with or preferably without any tool. For example, the interface 5 comprises a release button for demounting the module 4 and it has just to be "clicked" onto for mounting. Alternatively, the module 4 can be slided or pressed onto and off without button release. For example, the interface comprises a single eight-pole connector connecting the geodetic module 4 with the base 2.

Thereby, though the interface 5 is designed in such a way that fast fastening of various surveying modules 4 of different type (and therewith often different geometry and mass or mass distribution) is enabled, it is also designed in such a way that a repeatedly stable connection between module 4 and its base 2 is guaranteed. That is that the mounting remains positional precise despite environmental influences such a temperature change, various dismounting and mounting procedures and despite the fact that it is embodied as receptacle for various surveying and/or projection units 4. Thus, the high precise interface 5 allows for no shift of an internal reference point of respective module 4 but any coordinative measuring or projection is precisely referenced with respect to a common reference position, no matter how often there is a module change or how long a measurement tasks takes. The interface 5 combines easy handling and flexibility with high, stable and reproducible mounting position precision.

Figure 3 shows an example for various surveying and/or projection modules 4a-4d of different type which all can be mounted on base 2. That is the instrument 1 is designed such that exchangeability of a geodetic module 4a-4d of one type with another one of another type. Hence, the instrument 1 can advantageously be equipped with different surveying or projection heads, enabling multiple geodetic functionality with one and the same base 2 as main structure.

Figure 3 depicts the base 2 comprising mechanical and opto-electrical interface 5 on the left side and four different exemplary geodetic modules 4a, 4b, 4c and 4d which each of them can be combined with the base 2 to form a different geodetic instrument 1. Thus, only one base 2 as basic support-, drive-, energy- and computation-unit, providing defined positioning mechanism, controlling and data evaluation means, energy supply, HMI-elements as well as additional infrastructure such as shock protection, is sufficient for enabling various geodetic measurement and construction aid functionalities. Preferably, each module 4a-4d comprises an identifier, e.g. by RFID, such that the base 2 can automatically identify which type or which individual module 4a-4d is mounted.

First exemplary geodetic module 4a is embodied as a telescope surveying head. A measurement beam, generated by a light source (not shown) such as a laser source or SLED inside module 4 is emitted through objective 10 onto an object point. The reflected beam is captured through objective 10 by an optical sensor (not shown) and from the sensor signal a distance to the object point is calculated, e.g. based on TOF or phase measurement. The measurement beam can be visible or an additional visible light beam is generated as a pointer. The module 4a can also comprise a camera (with objective 10 being part of it) such that a user can capture images or a live-stream of the environment and view them on a display of the module 4a (not shown).

When used in stand-alone modus, the module 4a can be used as an electronic distance meter or camera. In combination with base 2, there is provided a geodetic instrument 1 in form of total station- or electronic tachymeter-type or lasertracker-type.

The second example, geodetic module 4b, is designed as a point and line-laser projection module, thus providing functionality of visible marking of spatial references. The point laser 11a can for example be used for point pointing or plumbing or perpendicular marking whereas the two (or more) line lasers 11b, 11c can mark vertical or -dependent on the orientation of module 4b- horizontal reference lines. When dismounted from base 2, it can be positioned nearly everywhere whereas a construction laser level or rotary laser as geodetic instrument 1 is provided in combination with base 2. As shown, in the example the first line laser 11b is perpendicular to the second line laser 11c and the point laser 11a is perpendicular to both line lasers 11b, 11c. Module 4c is a third example and embodied as a laser scanning head. It comprises a rotatable deflection element 23 for fast deflection of measurement beam such that a dense scan pattern of a high number of 3D coordinates of an object's surface can be acquired.

The fourth example is module 4d, embodied as a multi-photo measuring head. It comprises a number of photosensors or photodetectors 24 distributed on a housing of the module 4d.

Figure 4 illustrates another example of a tool-freely mountable and dismountable geodetic surveying and projection module 4e, providing specific geodetic functionality and being non-permanently or limitedly usable as a stand-alone geodetic unit. Module 4e comprises a surveying telescope 40 for coordinative measuring of object points using a measurement beam 41. Further, the module 4e comprises a horizontal projecting line laser 42 and a vertical projection line laser 43 as well as an orthogonal projection point laser 44. In the example as can be seen, the emission direction or plane of each of the two line lasers 42, 43 are perpendicular to each other as well as to the emission direction of point laser 44.

For capturing images of the surrounding or surveying environment, the module 4e has a panorama camera objective 46 on the top as well as a wide angle objective 47 on one side whereby both objectives can be part of a combined panorama and wide angle camera. In addition, geodetic module 4e comprises an illumination light 45 as sort of flashlight for illumination of a target object or field of view of the telescope 40 and/or camera objectives 46, 47.

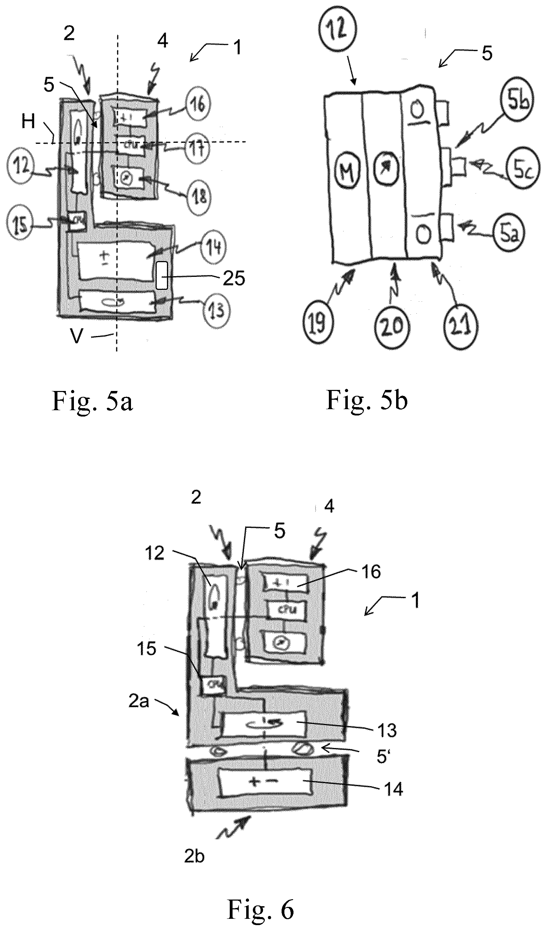

Figures 5a and 5b illustrate some "inner" components of the geodetic instrument 1.

Figure 5a is a cross-sectional view of the geodetic instrument 1 with the asymmetrical base part 2 to the left and bottom and the detachable module unit 4 to the upper right.

The surveying and/or projection module 4 comprises a battery 16, a data processing unit 17 with a permanent or non-permanent data storage and a surveying and/or projection unit 18.

The base module 2 comprises a lower part with a battery 14 for providing energy to the base 2, e.g. the motors for change of orientation, a processor 15, and through interface 5 to the module 4. Instead of or in addition to a battery 14, the base 2 comprises a power supply unit for connection to an external power supple. Further, an inclinometer sensor 25 is part of the base 2 for measuring a tilt of instrument 1.

The base 2 comprises above that in its lower part a first or vertical drive unit 13 for rotation of the base 2 and therewith module 4 (if attached) about the vertical axis V. In addition, the upper part comprises a second or horizontal drive unit 12 for rotation of the module 4 about horizontal axis H. In the example, the interface 5 and an angle encoder are integrated in the drive unit 12 which shown in more detail in figure 5b. Preferably, first and second drive unit 12 and 13 are substantially structurally identical, except for interface 5. As can be seen, base 2 is asymmetrical with respect to axis V due to the non-centric upper part, situated at one side of the lower battery part.

Figure 5b shows the first (or similarly second) drive unit 12 in detail. The drive unit comprises a motor 19, an angular measuring system or angular sensor 20 and an axle bearing 21. Further, it shows interface 5 with mechanical centering and fixation 5a, electrical contact 5b and optical interface 5c. The presented drive unit 12 resp. 13 provides a compact and nevertheless reliable and robust mean for precise rotation of geodetic instrument 1 resp. change of its aiming or targeting direction.

Figure 6 shows a variation of the embodiment as shown in figure 5a. In difference to this above described embodiment, the battery or power unit part 2b, comprising battery 14, is separated from and superimposed on the main part 2a by an interface 5', the main part 2a comprising CPU 15, second drive 12 and first drive 13. By first drive 13, the main part 2a and thus module 4 is drivable around the vertical axis and relative to battery part 2b. Thus, the relatively heavy power unit 14 has not to be moved which saves energy.

Preferably, the power unit part 2b is detachable tool free from the main part 2a. This allows for a quick and easy exchange or replacement of battery 14, without the need for a longer interruption of the geodetic work.

In particular advantageous embodiments, the whole instrument 1 is temporarily supplied with energy through interface 5 by the module battery 16 during exchange of main battery 14 or in case of any failure in power supply by base battery 14. Thus, advantageously, there is an electrical reserve in form of module battery 16 in case of low or broken main battery 14. This allows for a limited continuation of operation (limited with respect to time and/or functionality) which is e.g. particularly advantageous in case of measurements which otherwise would have to be repeated completely from the beginning. At least, an "emergency" power reserve by module battery 16 prevents loss of data as at least it gives time to permanently store measurement data before instrument 1 is off.

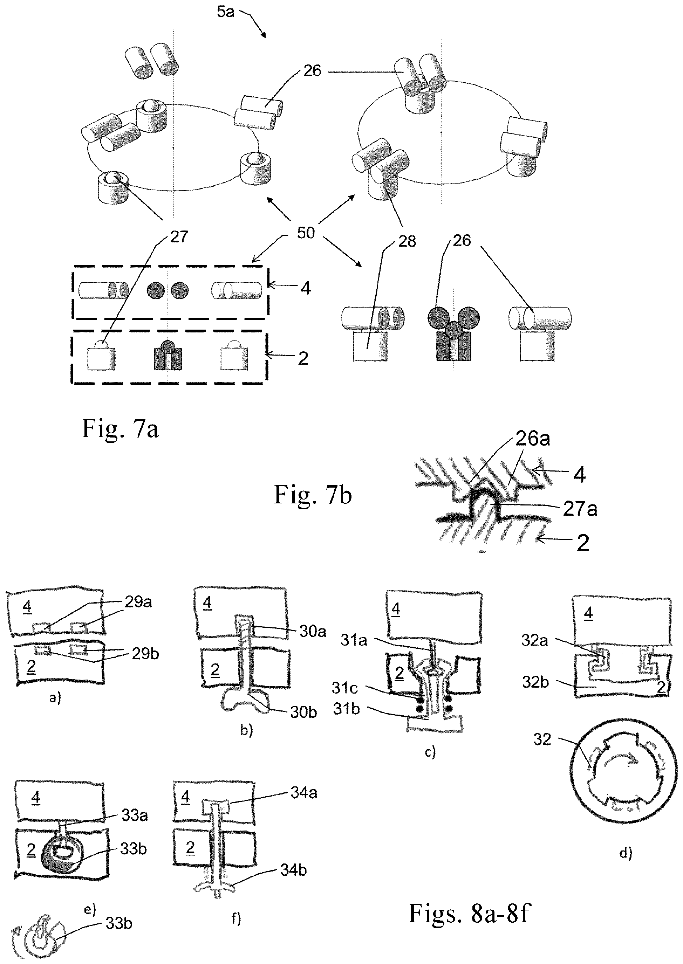

Figures 7a and 7b illustrate a way of position stable fixation of two separable modules or units of the geodetic instrument with respect to each other by a mechanic interface 5a.

Figure 7a shows in the upper part two 3D views of (part of) mechanical interface 5a as used for mounting or connection of a surveying or projection module and base module. In the lower part, there are two side and cross sectional views. On the left side, figure 7a depicts the reception part and the insertion part separated or dismounted (semi-exploded view) and the right side depicts the interface 5a when the modules are attached to each other.

As shown, the interface 5a comprises three balls 27 fixed in conical receptions (bores) 28, distributed equally around a center (120° angular spacing) and being part of the base module 2. The balls 27 are to be clamped by a pair of elongated cylindrical guiding elements 26 each situated in the interface's counterpart at surveying module 4. The clamping is for example effected by magnetic force. Therefore, for instance the cylinders 26 are made of steel and the balls 27 are made of steel or ceramic and a magnet either in the center of the arrangement (not shown) or located around the balls (not shown) are pulling the two parts 4 and 2 towards each other (see also figure 8a). This configuration results in a self-centering coupling.

A possible alternative to the configuration shown in figure 7a as a robust and tolerance independent interface, which can compensate for thermal expansion, too, the fixation 50 comprises three equally spaced cylinders 26 (or elongated prismatic bodies) clamped into a pair of balls 27 each. That is to say, in difference to the embodiment shown in figure 7a, not the balls 27 are fixed by cylinders 26 but the other way round.

Figure 7b shows in a sketchy cross-sectional view another alternative illustrating the underlying principle of a positional stable interface. The base module 2 comprises three spherical calottes 27a distributed in an area or plane. The calottes 27a are received by a two-point reception 26a accordingly distributed at the interface at surveying module 4.

Figures 8a-8f show in cross sectional views examples for fastening means as an instrument's mechanical interface or part of it, e.g. for convenient and user-friendly but nevertheless position stable mounting and dismounting a surveying and/or projection module 4 to the base module 2 (each depicted in a respective figure only symbolically).

Figure 8a shows a first example using magnetic force as already mentioned above. The instrument thereby comprises a set of magnets 29a, 29b. A first group of magnets 29a, situated at dismountable part 4 exert force on a second group of magnets 29b, situated at the static part 2. Surveying module 4 thus can be mounted by docking onto base part 2 and dismounted by pulling it away.

Figure 8b shows another example wherein the interface is secured by a screw 30b at base part 2 going into a thread 30a at mobile part 4. The screw 30b thereby can be revolved tool-free by hand as depicted or alternatively is designed for manipulation with a specialized tool like a screwdriver or an item like a coin or key fob as a tool.

Figure 8c shows an embodiment wherein a pin 31a is to be secured by a claw 31b at base part 2, the claw 31b being preloaded with a spring 31c (indicated by the black dots). The claw 31b and the interface at base part 2 thereby are formed in such a way that a force is exerted in the mounted state due to spring 31c.

Figure 8d shows an embodiment having a bayonet fastening 32, whereby in the lower part of figure 8d in addition a birds-eye view is given. Module 4 comprises the inner part 32a of the bayonet fastening and module 2 the outer (counter-)part 32b.

Figure 8e shows another embodiment with a claw 33b. Therein, a pin 33a is to be secured by a claw 33b at base part 2, the claw 33b being rotatable as indicated in lower part of figure 8e, showing a 3D-view of claw 33b.

Figure 8f shows an example with a ball lock pin 34b at base part 2 for being secured by reception 34a at module 4 for fixation.

Preferably, the mechanical interface comprises not more than one of such a fixation means as depicted in figures 8b, 8c, 8e and 8f. Thus, in all examples one movement of a user's hand is sufficient for mounting or dismounting (fix and unfix) of a separable unit of the geodetic instrument.

A skilled person is aware of the fact that details, which are here shown and explained with respect to different embodiments, can also be combined in other permutations in the sense of the invention if not indicated otherwise.

## Claims

1. Geodetic instrument (1), in particular for construction works, comprising a surveying and/or projection module (4, 4a-4d) supported by a base module (2),
wherein the surveying and/or projection module (4, 4a-4d) comprises at least one sensor (18, 24) and/or projector (18, 11a, 11b) for acquisition and/or projection of object data and
the base module (2) comprises
• an electrical power unit (14) for powering the geodetic instrument (1),
• a first processor (15), powered by the electrical power unit (14), for processing of geodetic data and control of the geodetic instrument (1),
• a drive (12, 13), powered by the electrical power unit (15), adapted for driving the geodetic surveying and/or projection module about two rotational axes (H, V), in particular a horizontal axis (H) and a vertical axis (V),
• at least one angle encoder for measuring the rotational position of the surveying and/or projection module (4, 4a-4d) with respect to the two rotational axes (H, V),
wherein the geodetic instrument (1) comprises
• an optical and/or electrical contact interface (5, 5b, 5c) adapted for transmission of data and/or energy between the base module (2) and the surveying and/or projection module (4, 4a-4d), and
• a mechanical interface (5, 5a) adapted for mechanical connection of the surveying and/or projection module (4, 4a-4d) to the base module (2),
whereby
• the interfaces (5, 5a-5c) are designed such that the surveying and/or projection module (4, 4a-4d) is mountable to the base module (2) and dismountable from the base module (2) by a user (3) and
• the geodetic instrument (1) is designed for mounting of various surveying and/or projection modules (4, 4a-4d) of different geodetic type to the base module (2) and execution of accordingly different geodetic surveying and/or projection functions.

2. Geodetic instrument (1) according to claim 1,
**characterized in that**
the geodetic instrument (1) is designed in such a way that all of the mountable various surveying and/or projection modules (4, 4a-4d) are referenced to one and the same origin of coordinates.

3. Geodetic instrument (1) according to claim 1 or 2,
**characterized in that**
the surveying and/or projection module (4, 4a-4d) is designed as a portable stand-alone surveying and/or projection module (4, 4a-4d) with a battery (16), a data storage and a second processor (17) in such a way that temporarily, in particular free-hand, surveying and/or projection with the surveying and/or projection module (4, 4a-4d) dismounted from the base module (2) is enabled, in particular wherein the battery (16) of the surveying and/or projection module (4, 4a-4d) serves as an electrical power reserve for the whole geodetic instrument (1).

4. Geodetic instrument (1) according to any of the preceding claims,
**characterized in that**
the interfaces (5, 5a-5c) are designed such that an operable mounting of dismounted surveying and/or projection module (4, 4a-4d) to the base module (2) - and analogically dismounting of mounted surveying and/or projection module (4, 4a-4d) - is effectable by a single manual action of the user (3), in particular
• exactly one substantially linear or rotational hand movement and/or
• whereby the mechanical interface (5, 5a) is designed for tool-free mounting and dismounting of the surveying and/or projection module (4, 4a-4d) and/or
• the mechanical and optical and/or electrical contact interfaces (5, 5a-5c) are designed as a joined interface (5).

5. Geodetic instrument (1) according to any of the preceding claims,
**characterized in that**
the mechanical interface (5, 5a) is designed such that a mechanically stable mounting of the surveying and/or projection module (4, 4a-4d) to the base module (2) is secured by at least one of, in particular by exactly one of,
• a magnet (29a, 29b),
• one screw (30b),
• one spring-loaded claw (31b, 31c),
• one twistable claw (33b),
• a bayonet fastening (32, 32a, 32b),
• one ball lock pin (34b).

6. Geodetic instrument (1) according to any of the preceding claims,
**characterized in that**
the mechanical interface (5, 5a) is designed in such a way that the mounting position of a respective surveying and/or projection module (4, 4a-4d) is precisely reproducible and thermally stable.

7. Geodetic instrument (1) according to claim 6,
**characterized in that**
the mechanical interface (5, 5a) comprises at least three guidance elements (50) with equal angular spacing to each other whereby each guidance element comprises a ball (27) or spherical calotte (27a) and a two-point support (26, 26a) as a receiving counterpart.

8. Geodetic instrument base module (2) comprising
• an electrical power unit (14),
• a processor (15), powered by the electrical power unit (14), for processing of geodetic data and control of the base module (2),
• a mechanical interface (5, 5a) and
• an optical and/or electrical contact interface (5, 5b, 5c),
wherein the interfaces (5, 5a-5c) are designed for mounting and dismounting of various surveying and/or projection modules (4, 4a-4d) of different geodetic type by a user (3), and
wherein the processor (15) is adapted for control of a respective surveying and/or projection module (4, 4a-4d),
the base module (2) further comprising
• a drive (12, 13), powered by the electrical power unit, adapted for driving the mechanical interface (5, 5a) and/or the base module (2) about two rotational axes (H, V), in particular a horizontal axis (H) and a vertical axis (V),
• at least one angle encoder for measuring the respective rotational position.

9. Geodetic instrument base module (2) according to claim 8,
**characterized in that**
the base module (2) comprises a
• power unit part (2b) comprising the power unit (14) and
• a main part (2a),
whereby the drive comprises
• a first drive unit (13) for rotation of the main part (2a) relative to the power unit part (2b) about a first, in particular vertical, axis and
• a second drive unit (12) for rotation of the interface relative to the main part (2a) about a second, in particular horizontal, axis.

10. Geodetic instrument base (2) according to any of claims 8 or 9,
**characterized in that**
the base module (2) is asymmetric with respect to a vertical axis (V).

11. Geodetic instrument base (2) according to claims 9 or 10,
**characterized in that**
the mechanical interface and the optical and/or electrical contact interface (5, 5a-5c) are integrated in the second drive unit (12).

12. Surveying and/or projection module (4, 4a-4d) comprising
• a mechanical interface (5, 5a) designed for connecting the surveying and/or projection module (4, 4a-4d) to a base module (2) according to claim 8 and
• an optical and/or electrical contact interface (5, 5b, 5c) adapted for transmission of data and/or energy between the base module (2) and the surveying and/or projection module (4, 4a-4d).

13. Surveying and/or projection module (4, 4a-4d) according to claim 12,
**characterized in that**
the surveying and/or projection module (4, 4a-4d) is designed as a portable stand-alone geodetic surveying and/or projection module (4, 4a-4d) with a battery (16), a data storage and a processor (17) in such a way that temporarily geodetic, in particular free-hand, surveying and/or projection with the surveying and/or projection module (4, 4a-4d) dismounted from the base module (2) is enabled.

14. Surveying and/or projection module (4, 4a-4d) according to claim 12 or 13,
**characterized in that**
the surveying and/or projection module (4, 4a-4d) is embodied as
• a laser scanning head (4c),
• an opto-electronic surveying head (4a),
• a camera head (4d) and/or
• a point and/or line laser projector (4b), in particular comprising a first line laser (11b), a second line laser (11c) and a point laser (11a), whereby the emission plane of each of the two line lasers (11b, 11c) is oriented orthogonal to each other and to emission direction of the point laser (11a).

15. Surveying and/or projection module (4, 4a-4d) according to any one of claims 12 to 14,
**characterized in that**
the surveying and/or projection module (4, 4a-4d) comprises
• a telescope and/or
• a panorama and/or wide angle objective (10),
and an illumination light for illumination of the field of view of the telescope and/or the objective (10), in particular wherein the surveying and/or projection module (4, 4a-4d) comprises an automatic target recognition unit designed for tracking geodetic targets.
